Europäisches Patentamt

European Patent Office

Office européen des brevets

(19)

(11) Veröffentlichungsnummer: **0 301 186 B1**

(12)

# EUROPÄISCHE PATENTSCHRIFT

(45) Veröffentlichungstag der Patentschrift: **30.10.91**

(51) Int. Cl.⁵: **F16C 33/61**

(21) Anmeldenummer: **88107779.6**

(22) Anmeldetag: **14.05.88**

(54) **Drahtwälzlager mit Flachdraht.**

(30) Priorität: **29.07.87 DE 3725027**

(43) Veröffentlichungstag der Anmeldung:
**01.02.89 Patentblatt 89/05**

(45) Bekanntmachung des Hinweises auf die
Patenterteilung:
**30.10.91 Patentblatt 91/44**

(84) Benannte Vertragsstaaten:
**AT DE ES FR GB IT SE**

(56) Entgegenhaltungen:
**DE-A- 2 131 132**  **DE-A- 2 724 849**
**DE-A- 2 738 287**  **DE-U- 1 879 514**
**FR-A- 1 377 402**  **FR-A- 2 262 223**
**FR-A- 2 393 185**  **US-A- 3 802 755**

(73) Patentinhaber: **Hoesch Aktiengesellschaft
Eberhardstrasse 12
W-4600 Dortmund 1(DE)**

(72) Erfinder: **Sinner, Karl-Helmut, Dipl.-Ing.
Laubenweg 8
W-4600 Dortmund 30(DE)**

## Beschreibung

Die Erfindung betrifft ein Großwälzlager nach dem Oberbegriff des Anspruches 1.

Derartige Großwälzlager werden eingesetzt für Anwendungsfälle, in denen die Lagerringe aus einem Material hergestellt sind, das keine ausreichende Oberflächenhärte besitzt, um die Wälzkräfte aufzunehmen. Die Lagerringe derartiger Lager bestehen dann beispielsweise aus Aluminium oder Kunststoff, während die eingelegten Laufdrähte aus gehärtetem Stahl bestehen.

Aus dem DE-U- 1 879 514 ist ein Großwälzlager der eingangs genannten Art bekannt. Bei diesem Lager sind rechteckige Drähte als Laufbahnen eingesetzt. Nachteilig bei diesem Stand der Technik ergibt sich, daß Fertigungstoleranzen an den Lagerringen, an den Laufdrähten und an den Wälzkörpern sich nicht ausgleichen können. Darüber hinaus führen Verwindungen der Anschlußkonstruktionen zu Zwängungen und örtlichen Spannungsspitzen im Lagersystem. Bei einem Lager, wie es die DE-A- 27 24 849 zeigt, sind die genannten Nachteile des vorgenannten Lagers durch den Einsatz von halbrunden Laufdrähten ausgeglichen. Diese Lagerbauform ist jedoch durch die Herstellung der halbrunden Lagerbetten in den Lagerringen sehr aufwendig in der Herstellung. Es benötigt ein großes Bauvolumen und hat durch die Verformungs- und Bewegungsmöglichkeiten zwischen Halbrunddraht und Drahtbettung eine geringe Eigensteifigkeit.

Von daher liegt der Erfindung die Aufgabe zugrunde, ein Lager der beschriebenen Gattung zu schaffen, das bei einem geringen Bauvolumen eine große Tragfähigkeit und Steifigkeit besitzt und geringe Drehwiderstandsschwankungen bei einer Drehbewegung über 360° aufweist.

Diese Aufgabe wird erfindungsgemäß durch die im kennzeichnenden Teil des Anspruches 1 angegebenen Merkmale gelöst. Weitere zweckmäßige und vorteilhafte Ausgestaltungen sind in den Unteransprüchen angegeben.

Das Großwälzlager nach der Erfindung erfüllt die Bedingungen der Aufgabenstellung und gewährleistet darüber hinaus die Vorteile einer wirtschaftlichen Herstellbarkeit durch die Reduzierung der Einzelteile, eine gute Dämpfung und eine sehr hohe Präzision. Die Präzision dieses Lagers wird nahezu ausschließlich durch den als rechteckige, radiale Scheibe ausgebildeten Laufdraht bestimmt. Dieser Laufdraht kann axial und radial auf eine sehr hohe Präzision geschliffen werden. Die übrigen Teile des vorgespannten Laufsystems passen sich dieser hohen Genauigkeit an.

Durch die radiale Teilung ergibt sich mindestens ein Atmungsstoß in Umfangsrichtung. Bei mehreren Teilungen ergeben sich Drahtsegmente.

Dadurch können vorteilhaft Temperaturspannungen ausgeglichen werden und es ergeben sich Fertigungs- und Montagevorteile.

Anhand der Zeichnung sind im folgenden Ausführungsbeispiele des Großwälzlagers nach der Erfindung näher erläutert. Es zeigen

Fig. 1 ein Großwälzlager im Halbschnitt,

Fig. 2 ein anderes Großwälzlager im Halbschnitt,

Fig. 3 ein weiteres Großwälzlager im Halbschnitt.

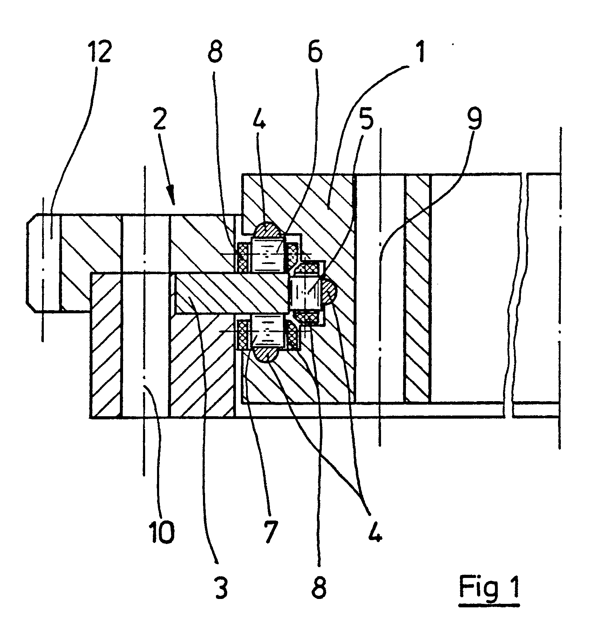

Wie aus den Fig. 1 bis 3 hervorgeht, besteht ein Großwälzlager jeweils aus einem inneren Lagerring 1 und einem äußeren Lagerring 2. Die Lagerringe 1, 2 können dabei ungeteilt oder geteilt aus jeweils zwei Ringen gebildet sein.

Zwischen den Lagerringen 1, 2 sind Wälzsysteme mit Wälzkörpern angeordnet. In den Ausführungsbeispielen bestehen sie jeweils aus einer radialen Rollenreihe 5 und zwei entgegengesetzt wirkenden axialen Rollenreihen 6, 7.

Bei der Lagerausbildung nach der Fig. 1 ist in einer Ausnehmung des geteilten äußeren Lagerringes 2 ein rechteckiger, radialer Laufdraht 3 eingesetzt. Dieser Laufdraht 3 ist sich radial erstreckend scheibenförmig ausgebildet und segmentförmig geteilt. Er besitzt eine Dicke, die etwa der Breite der Rollen der radialen Rollenreihe 5 entspricht, und er ragt mit seinem vorderen Bereich in den inneren Lagerring 1. Hier ist der rechteckige Laufdraht 3, der vorzugsweise gehärtet und geschliffen aus Stahl hergestellt ist, mit Laufbahnen ausgebildet, auf denen sich die radiale Rollenreihe 5 und die axialen Rollenreihen 6, 7 abwälzen.

Die Rollen stützen sich im inneren Lagerring 1 über Halbrundlaufdrähte 4 ab, die von entsprechenden Drahtbetten des Lagerringes 1 aufgenommen werden. Diese Halbrundlaufdrähte 4 verhindern durch ihre Flexibilität hohe Kantenpressungen zwischen Wälzkörper und Laufdraht, bewirken so eine gleichmäßige Lastverteilung im Wälzkörper und ein optimales Drehmomentverhalten des Lagers. Führungskäfige 8 dienen zur Führung der Wälzkörper. Zur Montage des Großwälzlagers an der Anschlußkonstruktion weisen sowohl innerer Lagerring 1 als auch äußerer Lagerring 2 Befestigungsbohrungen 9, 10 auf. Außerdem ist am äußeren Lagerring 2 eine Verzahnung 12 vorgesehen.

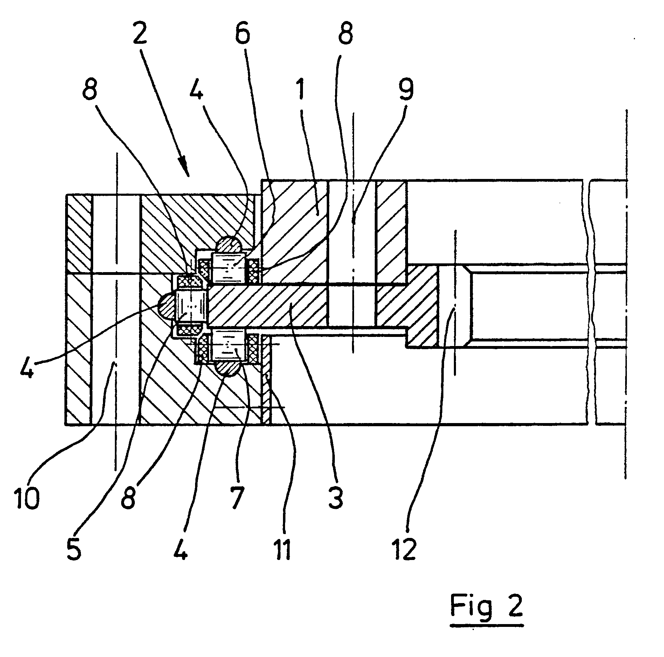

Die Ausführung nach der Fig. 2 entspricht vom System her der Ausführung nach der Fig. 1. Der Laufdraht 3 ist in diesem Fall dem inneren Lagerring 1 zugeordnet und erstreckt sich über seine gesamte Breite, um im Innendurchmesser in einer Verzahnung 12 auszulaufen. Der äußere Lagerring 2 ist wiederum geteilt ausgebildet und nimmt die Halbrundlaufdrähte 4 in entsprechenden Drahtbetten auf. Zur Führung des Führungskäfigs 8 der unteren axialen Rollenreihe 7 ist ein Führungsblech 11 vorgesehen.

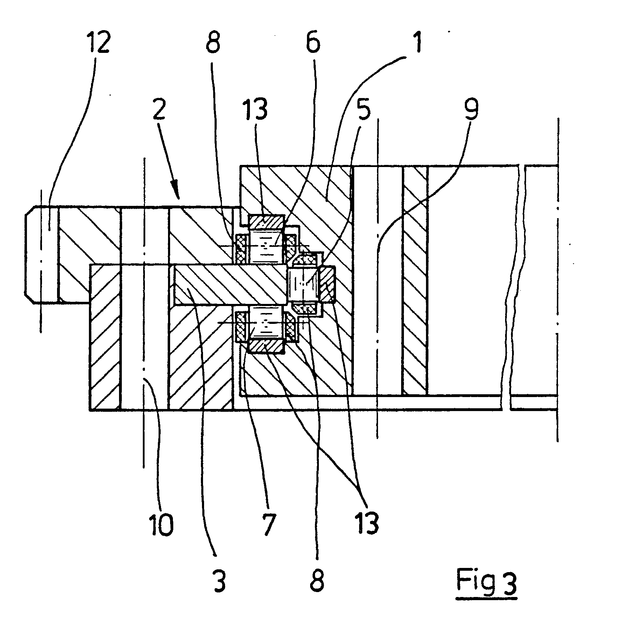

Die Ausführung nach der Fig. 3 entspricht der Ausführung nach der Fig. 1. Die im inneren Lagerring 1 eingebetteten Laufdrähte 13 haben jedoch einen ebenfalls rechteckigen Querschnitt. Ein derartig ausgebildetes Lager besitzt eine äußerst hohe Steifigkeit.

| | |
|---|---|
| 1 | Laggering |
| 2 | Lagerring |
| 3 | Laufdraht |
| 4 | Halbrundlaufdraht |
| 5 | Rollenreihe |
| 6 | Rollenreihe |
| 7 | Rollenreihe |
| 8 | Führungskäfig |
| 9 | Befestigungsbohrung |
| 10 | Befestigungsbohrung |
| 11 | Führungsblech |
| 12 | Verzahnung |
| 13 | Laufdraht |

**Patentansprüche**

1. Dreireihiges Rollen-Großwälzlager mit zwischen Lagerringen (1,2), angeordneten radialen und axialen Rollenreihen (5,6,7), als Wälzkörper, und diesen zugeordneten Laufbahnen, die auf Laufdraht körpern (3,4) vorgesehen sind dadurch gekennzeichnet, daß ein Laufdraht (3) im Querschnitt als rechteckige, sich radial erstreckende, ein- oder mehrfach radial geteilte Scheibe mit etwa einer Dicke entsprechend der Breite der Rollen der radialen Rollenreihe (5) ausgebildet, von allen Rollenreihen (5, 6, 7) umfaßt ist und durch den zugehörigen Lagerring (1, 2) gehalten wird.

2. Dreireihiges Rollen-Großwälzlager nach Anspruch 1, dadurch gekennzeichnet, daß der Laufdraht (3) in einer Ausnehmung des jeweils zugehörigen Lagerringes (1, 2) radial formschlüssig angeordnet ist.

3. Dreireihiges Rollen-Großwälzlager nach einem der Ansprüche 1 oder 2, dadurch gekennzeichnet, daß der Laufdraht (3) sich über die gesamte Breite des jeweils zugehörigen Lagerringes (1, 2) erstreckt und axial kraftschlüssig mit diesem verbunden ist.

4. Dreireihiges Rollen-Großwälzlager nach einem der Ansprüche 1 bis 3, dadurch gekennzeichnet, daß der Laufdraht (3) gegenüber den Laufbahnen als Zahnrad und/oder Dicht- bzw. Führungsfläche ausgebildet ist.

**Claims**

1. Three-row, large roller bearing having radial and axial roller rows (5, 6, 7), which are disposed between the bearing rings (1, 2), as rolling members, and raceways associated therewith, which are provided on race wire members (3, 4), characterised in that the cross section of one race wire (3) is in the form of a rectangular, radially extending, singly or multiply radially divided disc having approximately a thickness corresponding to the width of the rollers of the radial roller row (5), and is embraced by all the roller rows (5, 6, 7) and held by the associated bearing ring (1, 2).

2. Three-row, large roller bearing as in claim 1, characterised in that the race wire (3) is disposed in a recess of the respective associated bearing ring (1, 2) in a radially form-locking manner.

3. Three-row, large roller bearing as in one of claims 1 and 2, characterised in that the race wire (3) extends over the entire width of the respective associated bearing ring (1, 2) and is axially positively connected thereto.

4. Three-row, large roller bearing as in any of claims 1 to 3, characterised in that the race wire (3) opposite to the raceways is in the form of a toothed wheel and/or a sealing or guide surface.

**Revendications**

1. Palier à trois séries de rouleaux comportant, entre des anneaux de palier (1,2), des séries de rouleaux radiaux et axiaux (5,6,7) servant de corps de roulement, et des pistes de roulement pour ceux-ci, prévues sur des corps de roulement filiformes (3,4), caractérisé en ce qu'un fil de roulement (3), est réalisé sous la forme d'un disque de section rectangulaire, s'étendant radialement et divisé radialement en un ou plusieurs secteurs, avec une épaisseur correspondant à peu près à la largeur des rouleaux de la série de rouleaux radiaux, est entouré par toutes les séries de rouleaux (5,6,7) et est maintenu par l'anneau de palier (1,2) correspondant.

2. Palier à trois séries de rouleaux selon la revendication 1, caractérisé en ce que le fil de roulement (3) est disposé dans un évidement de chaque anneau de palier (1,2) correspondant, en étant maintenu mécaniquement dans le sens radial.

3. Palier à trois séries de rouleaux selon l'une des revendications 1 ou 2, caractérisé en ce que le fil de roulement (3) s'étend sur toute la largeur de chaque anneau de palier (1,2) correspondant et lui est relié de manière résistante aux efforts axiaux.

4. Palier à trois séries de rouleaux selon l'une des revendications 1 à 3, caractérisé en ce que le fil de roulement (3) est réalisé en forme d'engrenage et/ou de surface d'étanchéité ou de guidage, à l'opposé des pistes de roulement.

Fig 1

Fig 2

Fig 3